# EUROPEAN PATENT APPLICATION

(11) **EP 4 513 419 A1**
(43) Date of publication of application: **26.02.2025**
(21) Application number: 23906311.8
(22) Date of filing: 30.05.2023
(51) Int. Cl.: G06Q 40/03, G06F 18/214, G06N 20/00, G06Q 20/40

(54) **CREDIT LEARNING DEVICE, CREDIT LEARNING METHOD, CREDIT ESTIMATION DEVICE, CREDIT ESTIMATION METHOD, AND PROGRAM**

(30) Priority: 20.12.2022 JP 2022202883
(71) Applicant: Rakuten Group, Inc., Setagaya-ku Tokyo 158-0094 (JP)
(72) Inventor: GHOSH, Subrata, Tokyo 158-0094 (JP); JAIN, Ashley, Tokyo 158-0094 (JP); UMEDA, Takashi, Tokyo 158-0094 (JP); HASHIMOTO, Shuichiro, Tokyo 158-0094 (JP)
(74) Representative: EIP
(86) International application number: PCT/JP2023/020116
(87) International publication number: WO 2024/134925

(57) **Abstract**

The present invention has an object of enhancing the accuracy of individual creditworthiness estimation. A learning device 1 includes: a first training unit 23a that trains a first model using first training data that includes a combination of a first attribute data group related to a user who uses a first service and a label corresponding to a first score that varies according to risk borne by a service provider when the user uses the first service; and a second training unit 23b that trains a second model, which has some of parameters of a configuration of the trained first model as fixed parameters, using second training data that includes a combination of a second attribute data group related to a user who uses a second service and a label corresponding to a second score that varies according to risk borne by a service provider when the user uses the second service.

## Description

### [Technical Field]

The present disclosure relates to a technology for estimating users' creditworthiness.

### [Background Art]

Conventionally, a determination device has been proposed that includes: an acquisition unit that acquires asset information representing information where individual assets possessed by a first user are optionally combined together and a behavior history on a network regarding the first user; and a determination unit that, based on the asset information and the behavior history on the network regarding the first user acquired by the acquisition unit, estimates information about the assets of a second user (see PTL 1).

Further, in estimating credit risk, it has been conventionally proposed to perform transfer learning from the domains of credit card loans and debt adjustment to the domains of small-scale business loans (see NPL 1).

### [Citation List]

### [Patent Literature]

[PTL 1] Japanese Patent Application Laid-open No. 2018-110017

### [Non Patent Literature]

[NPL 1] Hendra Suryanto, et al., "Transfer Learning in Credit Risk," Joint European Conference on Machine Learning and Knowledge Discovery in Databases (pp. 483-498), Springer, Cham, 2019

### [Summary of Invention]

### [Technical Problem]

Conventionally, various technologies have been proposed to assess users' creditworthiness regarding prescribed services. The conventional technologies produce certain effects in accurately assessing individual creditworthiness but have room for improvements in flexibly enhancing the accuracy of creditworthiness estimation in specific domains.

In view of the above problem, the present disclosure has an object of flexibly enhancing the accuracy of individual creditworthiness estimation in specific domains.

### [Solution to Problem]

An example of the present disclosure provides a credit learning device including: first training means for training a first model using first training data that includes a combination of a first attribute data group related to a user who uses a first service and a label corresponding to a first score that varies according to a degree of risk borne by a provider of the first service when the user uses the first service; and second training means for training a second model, which has some of parameters of a configuration of the trained first model as fixed parameters, using second training data that includes a combination of a second attribute data group related to a user who uses a second service different from the first service and a label corresponding to a second score that varies according to a degree of risk borne by a provider of the second service when the user uses the second service.

Further, another example of the present disclosure provides a credit learning device including: first training means for training a first model using first training data that includes a combination of a first attribute data group related to a user belonging to a first segment among users who use a first service and a label corresponding to a score that varies according to a degree of risk borne by a provider of a second service when the user uses a second service different from the first service; and second training means for training a second model, which has some of parameters of a configuration of the trained first model as fixed parameters, using second training data that includes a combination of a second attribute data group related to a user belonging to a second segment different from the first segment among the users who use the first service and a label corresponding to a score that varies according to a degree of risk borne by a provider of the second service when the user uses the second service.

Further, another example of the present disclosure provides a credit estimation device including: estimation means for estimating the second score set for a target user by inputting an attribute data group related to the target user into the second model trained by the above training method.

The present disclosure can be grasped as an information processing device, a system, a method executed by a computer, or a program executed by a computer. Further, the present disclosure can also be grasped as a recording medium readable by computers, devices, machines, or the like, where such a program is recorded. Here, the recording medium readable by computers or the like refers to a recording medium that can store information such as data and programs through electrical, magnetic, optical, mechanical, or chemical operations and can be read by computers or the like.

### [Advantageous Effects of Invention]

According to the present disclosure, it is possible to flexibly enhance the accuracy of individual creditworthiness estimation in specific domains.

### [Brief Description of Drawings]

[Fig. 1]

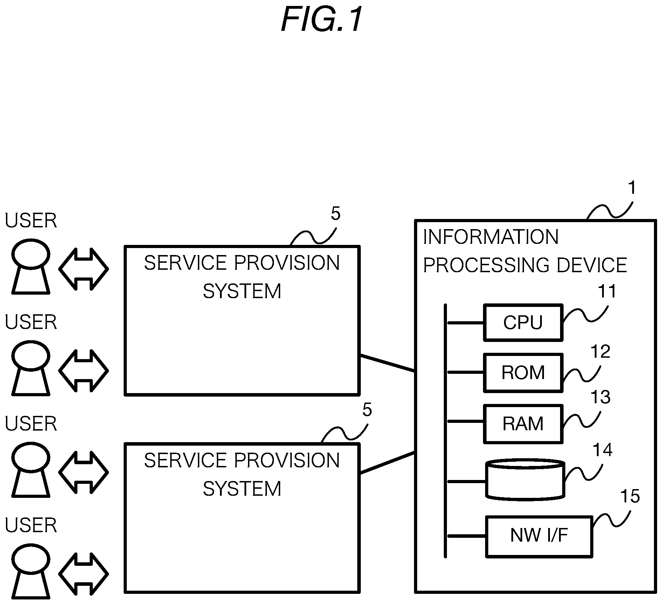

   Fig. 1 is a schematic diagram showing the configuration of an information processing system according to a first embodiment.
[Fig. 2]

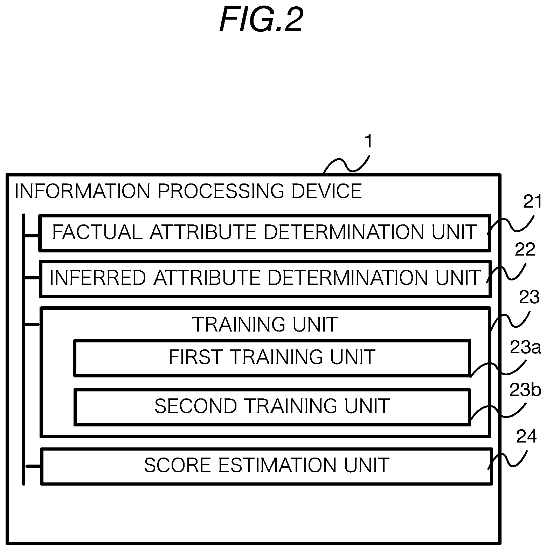

   Fig. 2 is a diagram showing the outline of the function configuration of an information processing device according to the first embodiment.
[Fig. 3]

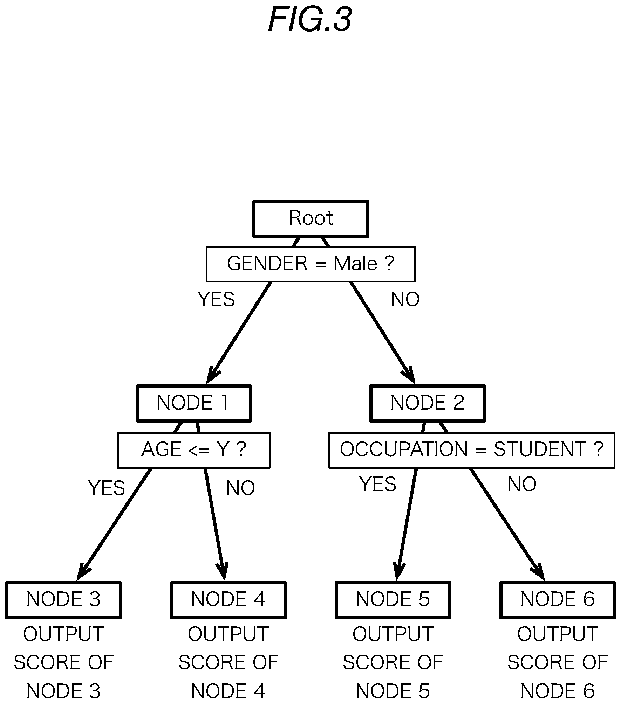

   Fig. 3 is a simplified diagram showing the concept of a decision tree in a machine learning model employed in the first embodiment.
[Fig. 4]

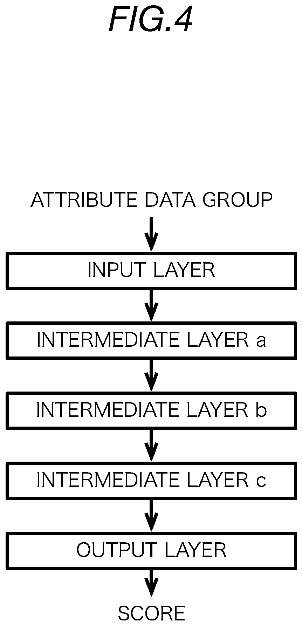

   Fig. 4 is a diagram showing the summary of a first model generated when a framework based on a neural network is employed in the first embodiment.
[Fig. 5]

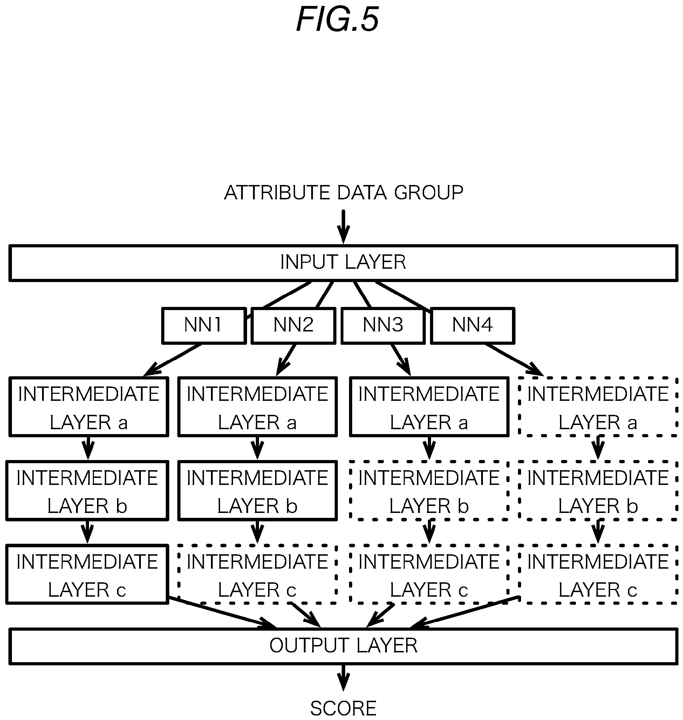

   Fig. 5 is a diagram showing the summary of a second model generated when a framework based on neural networks is employed in the first embodiment.
[Fig. 6]

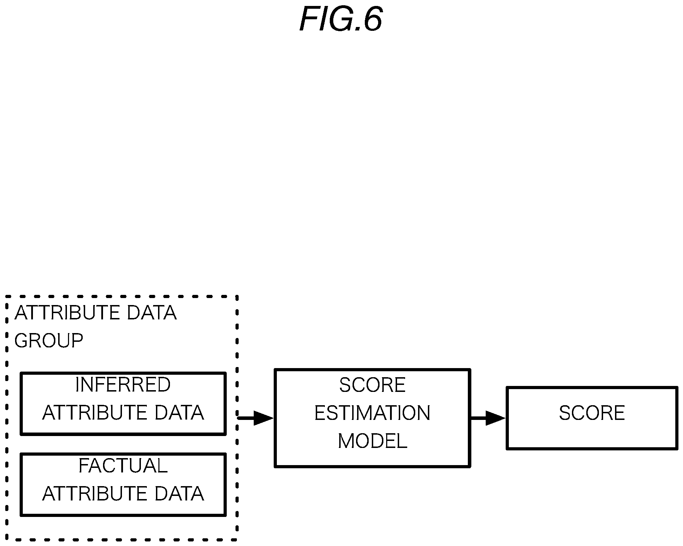

   Fig. 6 is a simplified diagram of score estimation processing according to the first embodiment.
[Fig. 7]

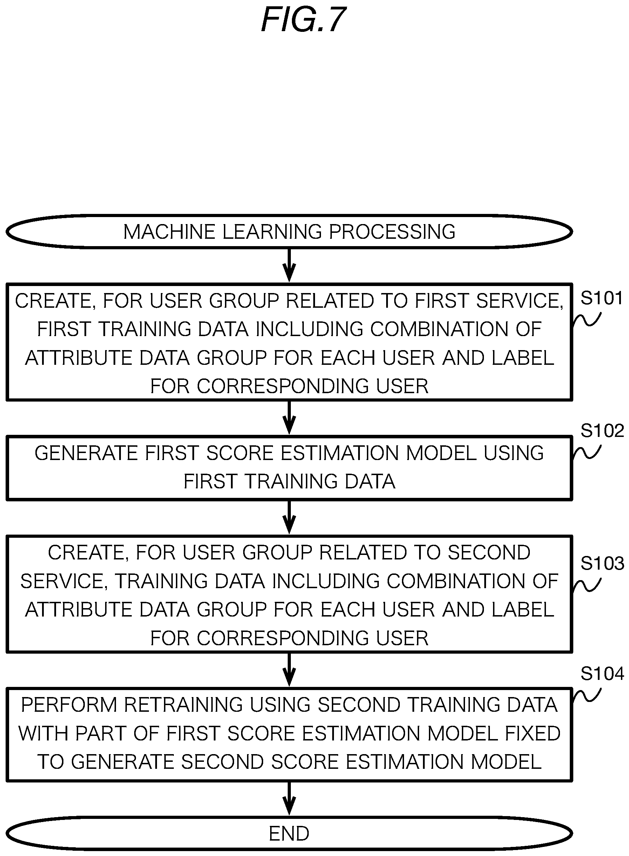

   Fig. 7 is a flowchart showing the flow of machine learning processing according to the first embodiment.
[Fig. 8]

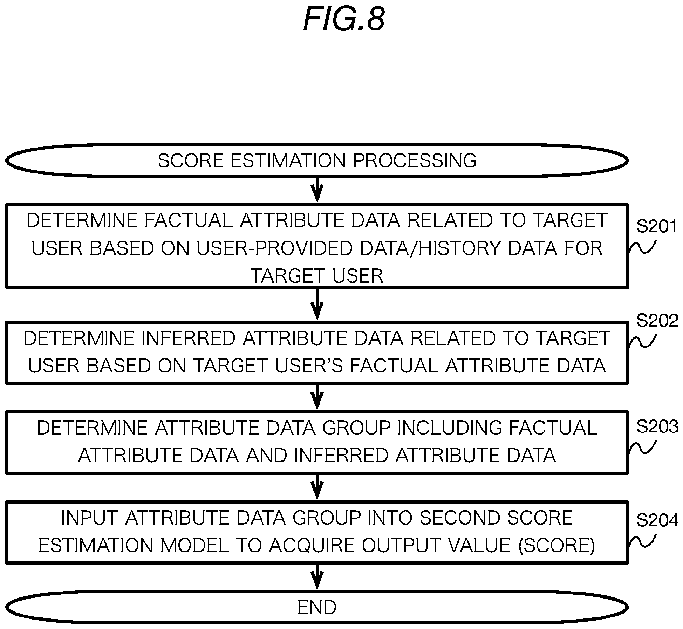

   Fig. 8 is a flowchart showing the flow of score estimation processing according to the first embodiment.
[Fig. 9]

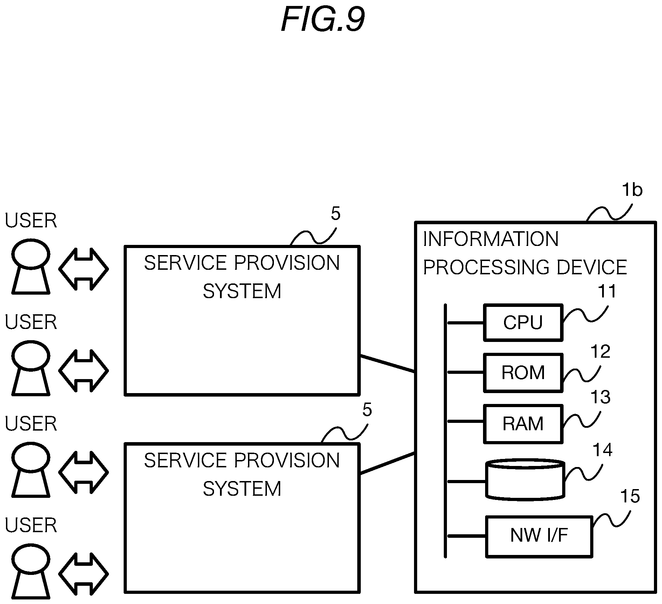

   Fig. 9 is a schematic diagram showing the configuration of an information processing system according to a second embodiment.
[Fig. 10]

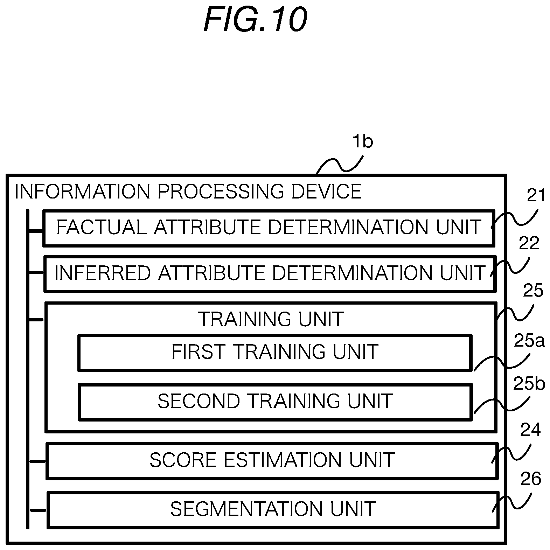

   Fig. 10 is a diagram showing the outline of the function configuration of an information processing device according to the second embodiment.
[Fig. 11]

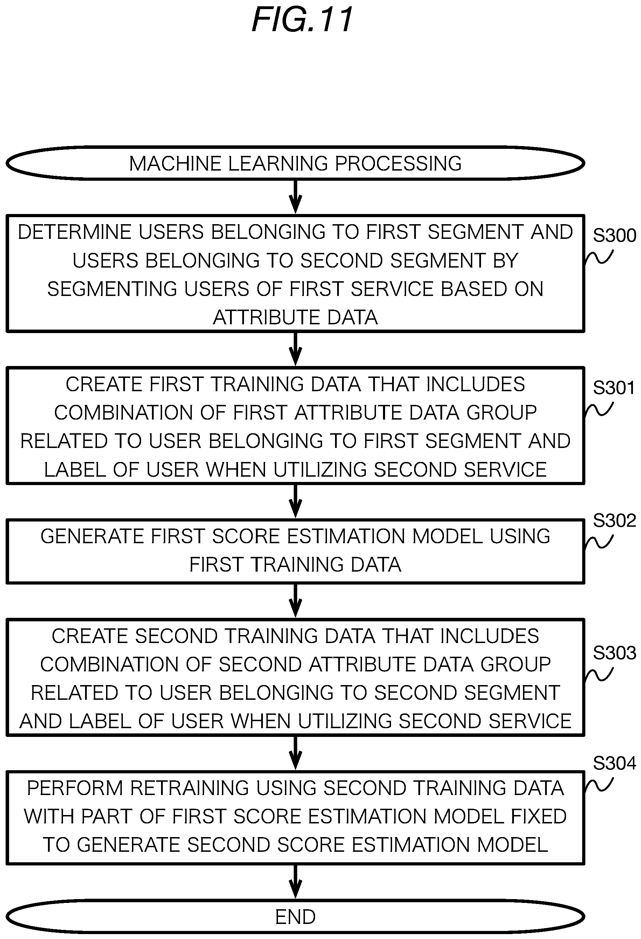

   Fig. 11 is a flowchart showing the flow of machine learning processing according to the second embodiment.

### [Description of Embodiments]

Hereinafter, embodiments of an information processing device, a method, and a program according to the present disclosure will be described based on the drawings. However, the embodiments described below are provided for exemplification purposes and do not intend to limit the information processing device, the method, and the program according to the present disclosure to the specific configurations described below. In implementing the embodiments, specific configurations corresponding to the embodiments are appropriately employed, and various improvements or modifications may be made. The present invention can appropriately mutually employ at least some of the configuration from each of the embodiments and variations described later. Note that in the embodiments and variations described later, a credit learning device, a credit learning method, a credit estimation device, and a credit estimation method will simply be referred to as a learning device, a learning method, an estimation device, and an estimation method, respectively.

### <First Embodiment>

In this embodiment, a mode will be described where the technology according to the present disclosure is implemented to perform retraining using datasets related to a finance-related service different from a deferred payment service based on a machine learning model generated to calculate users' default risk ("deferred payment risk" described later) related to the deferred payment service, in order to enable labels indicating the deferred payment risk to be used to estimate risk related to the different finance-related service. However, the technology according to the present disclosure is broadly applicable to technologies for calculating scores for users related to a different service, using a model generated with datasets related to one service to calculate scores for users related to the one service. The scope of the present disclosure is not limited to the example shown in the embodiment. For example, the technology according to the present disclosure may also be implemented to enable the estimation of risk for a plurality of different services in fields other than finance.

### <<Configuration of System>>

Fig. 1 is a schematic diagram showing the configuration of an information processing system according to this embodiment. In the information processing system according to this embodiment, an information processing device 1 and one or a plurality of service provision systems 5 are connected to be capable of communicating with each other. Users are the consumers of services provided by the service provision systems 5 and receive the services by accessing the service provision systems 5 via user terminals. Here, the information processing device 1 refers to a learning device, an estimation device, or a combination thereof.

The information processing device 1 is a computer including a CPU (Central Processing Unit) 11, a ROM (Read Only Memory) 12, a RAM (Random Access Memory) 13, a storage device 14 such as an EEPROM (Electrically Erasable and Programmable Read Only Memory) and an HDD (Hard Disk Drive), a communication unit 15 such as an NIC (Network Interface Card), and the like. However, the specific hardware configuration of the information processing device 1 can appropriately be omitted, replaced, and added according to the embodiment. Further, the information processing device 1 is not limited to a device composed of a single housing. The information processing device 1 may be realized by a plurality of devices using technologies such as so-called cloud and distributed computing.

The service provision systems 5 are computers including a CPU, a ROM, a RAM, a storage device, a communication unit, an input device, an output device, and the like (not shown). Further, each of these systems and terminals is not limited to a device composed of a single housing. These systems and terminals may be realized by a plurality of devices using technologies such as so-called cloud and distributed computing.

The services provided by the service provision systems 5 include, for example, online shopping services, online reservation services, loan services, banking services, credit card services, deferred payment services, electronic money payment services, advertising services, operation center services, subscription services, map information services, or the like. Note that "deferred payment" includes not only services referred to as so-called Buy Now Pay Later (BNPL) but also purchases of products or services made using any type of deferred payment.

The services provided by the service provision systems 5 are not limited to those exemplified in this embodiment. Then, the service provision systems 5 notify the information processing device 1 of user-related data during the provision of the services. Here, the user-related data includes the usage history data of the services used by the users. The contents of the usage history data of the services vary according to the contents of the services and may include, for example, history data of users' positional information, payment history data of credit card usage amounts or deferred payment usage amounts, usage history data of electronic money, transaction history data (including purchase history data of products or the like), reservation history data, users' operation history data from operation centers, or the like.

In this embodiment, a mode will be described where, within a finance-related service (that is, a service categorized under "finance" in a business classification or area (segment, category, domain)) provided by the service provision systems 5, which includes a deferred payment service, a loan service, a banking service, and a credit card service among various services, retraining is performed using datasets related to a different finance-related service (for example, a loan service, which corresponds to a "second service" described later) based on a machine learning model generated to calculate users' deferred payment risk related to a deferred payment service (corresponding to a "first service" described later), in order to enable labels indicating the deferred payment risk to correspond to risk related to the different finance-related service. Here, the retraining refers to transfer learning, additional learning, or the like according to the training mode. Note that the service groups in this embodiment may include service groups where membership programs (user identifiers) are common, service groups where point programs (electronic values such as points that can be granted or used) are common, or service groups that offer benefits usable in another service along with the usage of one service.

The information processing device according to the present disclosure uses a machine learning model that outputs credit scores (in this embodiment, scores indicating deferred payment risk) using user attribute data or the like as input. Note that the attribute data used as the input here may also include data indicating default. By using various attribute data as input, the information processing device 1 according to the present disclosure calculates universal and generalized credit scores, which are generated as a result of a unified reflection of users' general attributes. The calculated credit scores are usable in credit evaluation (determination involving the approval or rejection of deferred payments) in deferred payment services or the like. As described above, in this embodiment, the calculated credit scores are used to determine whether the users are targets for proposing settlement method options.

Here, the user attribute data includes factual attribute data and inferred attribute data. The attribute data includes, for example, data represented in data formats such as scores (for example, continuous values of 0 or more and 1 or less) and labels (for example, binary values corresponding to presence or absence or affirmation or negation). However, the formats of the attribute data are not limited to those exemplified in the present disclosure. Further, the attribute data may include, for example, online service usage conditions and the usage conditions of electronic values such as points. Further, the online service usage conditions may include at least any of cancellation numbers, cancellation rates, and order numbers in online shopping services or online reservation services.

The factual attribute data refers to data indicating factual attributes that are confirmable as facts about the users based on user-provided data provided by the users themselves, history data collected about the users, or the like. Examples of the user-provided data include, for example, registered data such as names, e-mail addresses, telephone numbers, addresses, workplaces, and schools registered by the users themselves, as well as data obtained from the users through questionnaires or the like. Examples of the history data include, for example, the usage history data of e-commerce transaction services provided by the service provision systems 5 as described above. The factual attribute data is preferably data where the user-provided data or history data described above has been converted into a data format suitable for marketing and/or analysis purposes. Examples of the factual attribute data that can be obtained based on usage history data include, for example, the genres or categories of products or services frequently used by the users, as well as commercial areas, leisure spots, sightseeing locations, and the like frequently visited by the users.

Further, the inferred attribute data refers to data indicating inferred attributes obtained through inference based on the user-provided data, history data, factual attribute data, and the like. In this embodiment, the inferred attribute data includes characteristics of the users or the like that are inferred or predicted using a machine learning technology. The inferred attribute data is preferably data about attributes that affect users' behavior when used for targeting.

When, for example, a decision tree model is used in this embodiment, importance is assigned to each attribute data. The importance represents the degree of correlation between the attribute data and credit scores when the attribute data is used to calculate the credit scores. Every time the appropriateness of the credit scores is evaluated by the training unit 23 described later, the parameters of the model are adjusted so that the credit scores become more appropriate values. The importance of each attribute data corresponds to, for example, a weight related to each node (each regression tree) in a model for calculating credit scores, such as the decision model described later, and is appropriately determined during the process of calculating the credit scores.

Here, the attribute data group may include demographic attributes, behavioral attributes, or psychographic attributes. The demographic attributes include, for example, users' gender, family structure, age, or the like. The behavioral attributes may be based on the usage history data of services and include, for example, the presence or absence of the usage of cash advances, the presence or absence of the usage of revolving payments, deposit and withdrawal histories related to prescribed accounts, commercial transaction histories related to any product or service including gambling or lotteries (which may include online transaction histories in online market places or the like), and users' movement histories using positional or location information, or the like. The psychographic attributes include, for example, preferences related to gambling or lotteries, or the like. However, the available users' attributes are not limited to those exemplified in this embodiment. For example, attributes such as the "time required for operations (phone calls)" from operation center services and "credit card usage amounts or deferred payment usage amounts" may also be used. The demographic attributes and the behavioral attributes may be treated as factual attributes. The psychographic attributes may be treated as inferred attributes. Note that attributes belonging to the demographic attributes may include inferred attributes inferred based on factual attributes derived from user-provided data or history data. Similarly, attributes belonging to the behavioral attributes may include inferred attributes inferred based on factual attributes derived from user-provided data or history data. The psychographic attributes may include factual attributes derived from user-provided data including, as an example, the results of will input by the users.

Fig. 2 is a diagram showing the outline of the function configuration of the information processing device 1 according to this embodiment. The information processing device 1 functions as an information processing device that includes a factual attribute determination unit 21, an inferred attribute determination unit 22, a training unit 23, and a score estimation unit 24 when a program stored in the storage device 14 is loaded into the RAM 13 and executed by the CPU 11 and then each hardware provided in the information processing device 1 is controlled. Note that in this embodiment and other embodiments described later, each function provided in the information processing device 1 is executed by the CPU 11 that represents a general-purpose processor. However, some or all of these functions may be executed by one or a plurality of dedicated processors.

The factual attribute determination unit 21 determines factual attribute data confirmable as facts about users, based on user-provided data provided by the users' themselves and/or history data of the users. In this embodiment, the factual attribute determination unit 21 determines factual attribute data related to the users, using methods such as aggregating user-provided data and/or history data, determining corresponding attributes with reference to other data such as maps, and using user-provided data and/or history data as they are. Note that in this embodiment, a method where factual attribute data related to the users is determined based on user-provided data and/or history data of users is employed, but the factual attribute data related to the users may be acquired using other methods.

The inferred attribute determination unit 22 determines inferred attribute data about target users, based on at least user-related data that includes one or a plurality of factual attribute data determined by the factual attribute determination unit 21 about the users. In this embodiment, the inferred attribute determination unit 22 determines inferred attributes based on output values obtained by inputting user-related data, which includes one or a plurality of factual attribute data related to target users, into an attribute inference model that refers to a machine learning model. Note that in this embodiment, output values from an attribute inference model represent values indicating the likelihood that target users have prescribed inferred attributes. When the output values from the attribute inference model fall within a prescribed range, the inferred attribute determination unit 22 determines that the target users have the inferred attributes. When it is determined that the target users have the prescribed inferred attributes, the inferred attribute determination unit 22 sets the labels of the inferred attribute data about the target users at values indicating the presence or absence of the attributes or the types of the attributes. Further, the inferred attribute data may be represented by scores rather than by labels. In this case, the inferred attribute determination unit 22 assigns values, which indicate the degree (probability) of the application of the inferred attributes, to the scores of the inferred attribute data about the target users. The degree may be represented as an output value from the attribute inference model.

Note that it is also possible for the inferred attribute determination unit 22 to infer missing (insufficient) attribute data based on other attribute data. Therefore, if attribute data is missing or insufficient for certain users, attribute data inferred by the inferred attribute determination unit 22 may be used instead of actual attribute data. The supplementation of attribute data by the inferred attribute determination unit 22 can also be applied when the attribute data of users (for example, light users in a first service) with insufficient amounts or quality of attribute data is supplemented in the second embodiment described later.

The training unit 23 generates and/or updates a score estimation model using the score estimation unit 24. The score estimation model refers to a machine learning model that, when one or a plurality of attribute data (attribute data groups) related to a target user is input, outputs a credit score indicating the degree of risk that a deferred payment will not be properly settled by the target user while using the deferred payment. By using such a machine learning model, in this embodiment, it is possible to obtain output that considers factors specially related to deferred payments as credit scores, rather than just credit scores. Further, in this embodiment, an example will be described where higher credit scores indicate higher creditworthiness (lower risk), while lower credit scores indicate lower creditworthiness (higher risk). However, the relationship between the magnitude of the scores and the degree of the risk may also be reversed.

In the generation and/or updating of a score estimation model, the training unit 23 creates training data for each user that includes a combination of the attribute data group of the user and a credit score related to a user who shares the same attribute data group. Then, the training unit 23 generates and/or updates a score estimation model based on the training data. As described above, the attribute data group input into the score estimation model includes factual attribute data determined by the factual attribute determination unit 21 and inferred attribute data inferred by the inferred attribute determination unit 22 based on user-related data that includes the factual attribute data, and is input as training data to the training unit 23 in combination with risk related to corresponding users and labels indicating corresponding scores. In this embodiment, the credit scores assigned to the training data represent credit scores determined based on the deferred payment history data of users corresponding to combinations of user attributes. Here, the deferred payment history data includes data indicating the presence or absence of default or the amount of default in the deferred payment, and the like. At this time, the credit scores may represent credit scores determined based on rules or manually set (annotated) credit scores. Further, the credit scores may also represent credit scores that were corrected by an administrator or the like after being previously output by the score estimation model.

A framework for generating or updating a machine learning model employable as a score estimation model or the like to implement the technology according to the present disclosure is based on, for example, an ensemble learning algorithm. For example, the framework may employ a machine learning framework (for example, LightGBM) based on a Gradient Boosting Decision Tree (GBDT). In other words, the framework may employ a machine learning framework based on a decision tree model to carry over the error between an answer value and a predicted value across successive weak learners (weak classifiers). Here, the predicted value refers, for an example, to a predicted credit score. Note that the framework may employ, in addition to LightGBM, boosting methods such as XGBoost and CatBoost. A framework using a decision tree can generate or update a machine learning model with relatively high performance while requiring relatively small time and effort to adjust parameters compared to a framework using a neural network. However, the framework for generating or updating a machine learning model employable to implement the technology according to the present disclosure is not limited to the one exemplified in this embodiment. For example, another learner such as a random forest may be employed as a learner instead of a gradient boosting decision tree, or a learner that is not referred to as a so-called weak learner such as a neural network may also be employed. Further, particularly when a learner that is not referred to as a so-called weak learner such as a neural network is employed, ensemble learning may not be employed.

Fig. 3 is a simplified diagram showing the concept of a decision tree in a machine learning model employed as a score estimation model or the like in this embodiment. When a machine learning framework based on a decision tree algorithm for gradient boosting is employed, branching conditions for each node of a decision tree are optimized. Specifically, in a machine learning framework based on a decision tree algorithm for gradient boosting, a credit score is calculated for each user group that has attributes indicated by two child nodes branched from one parent node, and the branching conditions of the parent node are then optimized so that the difference between the credit scores becomes large (for example, so that the difference becomes maximum, or equal to or greater than a prescribed threshold), that is, so that the two child nodes are properly branched. For example, if an attribute indicated as the branching condition of a node is age, it is possible to change the age set as a threshold for branching or to change the branching condition to an attribute other than age. By recursively optimizing the branching conditions of all the nodes of a decision tree in the manner described above, the accuracy of credit score estimation based on attribute data groups can be improved.

In this embodiment, the training unit 23 includes at least a first training unit 23a and a second training unit 23b.

The first training unit 23a trains a first model (first score estimation model) using first training data that includes a combination of a first attribute data group related to a user who uses a first service (in this embodiment, a deferred payment service) and a label corresponding to a score (a credit score for the user in the first service) that varies according to the degree of risk (deferred payment risk) borne by the provider of the first service when the user uses the first service. As described above, the first service refers to the deferred payment service in this embodiment. Further, the risk borne by the provider of the first service refers to the deferred payment risk that is determined based on the payment history in the deferred payment service and represents the risk that a deferred payment will not be properly settled by the user while using the deferred payment, as indicated by any index (in this embodiment, a label that varies according to the degree of the deferred payment risk).

The second training unit 23b trains a second model (second score estimation model), which has some of the configuration (parameters such as intermediate layers, nodes, and other weights) of the first model trained by the first training unit 23a as fixed parameters, using second training data that includes a combination of a second attribute data group related to a user who uses a second service (in this embodiment, a loan service) and a label corresponding to a second score that varies according to the degree of risk borne by the provider of the second service when the user uses the second service. The second service refers to a service different from the first service. In this embodiment, an example will mainly be described where the second service refers to a loan service. However, the second service only needs to be a service where the correlation between risk borne by the provider of the first service when the user uses the first service and risk borne by the provider of the second service when the user uses the second service is confirmed or inferred, and is not limited to the one exemplified in this embodiment. For example, for the same user groups, a combination of services may be employed where scores corresponding to the risk in the first service and scores corresponding to the second service are correlated.

When a machine learning framework based on a gradient boosting decision tree is employed in the first and second models, the second training unit 23b trains the second model, which has the parameters of some of the nodes in the first model as fixed parameters, using second training data to update the parameters (weights) of the nodes that were not frozen. Further, at this time, the second training unit 23b may train the second model, where some of the tree structure of the first model is fixed, using the second training data.

Here, in determining the parameters of the nodes that are frozen, for example, a method for preferentially freezing nodes with higher importance, that is, nodes corresponding to branching conditions (attributes) that most significantly affect the estimation (output) by the model, or nodes that have an influence of a prescribed reference or more on the output may be employed (see Fig. 3). Further, in updating the parameters, for example, parameters (weights) other than those of frozen layers or nodes can be updated so that the loss between the dataset of a target domain (destination for repurposing, here, the second service) and the output of a network becomes minimal.

When a machine learning framework based on a neural network is employed in the first and second models, the second training unit 23b trains the second model, which has some of the parameters of the intermediate layers (hidden layers) in the first model as fixed parameters, using second training data. At this time, the second training unit 23b may train the second model, which has a plurality of copies of trained first models arranged in parallel with a common output layer and has some of the parameters of the intermediate layers (hidden layers) fixed, using the second training data.

Fig. 4 is a diagram showing the summary of a first model generated by the first training unit 23a when a machine learning framework based on a neural network is employed in this embodiment. Using the machine learning framework based on the neural network, the first training unit 23a trains the first model using first training data that includes a combination of a first attribute data group related to a user using a first service and a label that varies according to the degree of risk borne by the provider of the first service when the user uses the first service. In the example of Fig. 4, the neural network including intermediate layers (hidden layers) a to c is shown as an example of the first model.

Fig. 5 is a diagram showing the summary of a second model generated by the second training unit 23b when a machine learning framework based on neural networks is employed in this embodiment. The second training unit 23b connects a plurality of copies of neural networks, which have been trained using datasets from a source domain (a source for repurposing, here, a first service), in parallel and retrains some of the intermediate layers to generate a second model. Referring to the example shown in the figure, for example, the second training unit 23b copies a plurality of neural networks including intermediate layers a to c (in the example shown in the figure, four neural networks, NN1 to NN4), each of which is included in a first model (see Fig. 4) that has been trained using datasets (first training data) related to a first service representing a source domain. Then, the second training unit 23b connects the neural networks NN1 to NN4 in parallel with a common input layer and output layer. Then, the second training unit 23b freezes some of the intermediate layers (in the example shown in Fig. 5, the intermediate layers a to c of the NN1, the intermediate layers a and b of the NN2, and the intermediate layer a of the NN3) to create a second model. Then, the second training unit 23b performs training processing on the second model with datasets (second training data) related to a target domain (second service) to update the intermediate layers that were not frozen (in the example shown in Fig. 5, the intermediate layer c of the NN2, the intermediate layers b and c of the NN3, and the intermediate layers a to c of the NN4 indicated by broken lines).

Note that the method for freezing the intermediate layers described using Fig. 5 is an example in this embodiment, and various variations may be employed for freezing the intermediate layers (see, for example, NPL 1). Further, in the example described using Fig. 5, the plurality of copies of the neural networks trained using the datasets from the source domain are connected in parallel to create the second model. However, the second training unit 23b may retrain a single neural network trained using the datasets from the source domain (that is, the second training unit 23b does not create the plurality of copies of the intermediate layers), with some of the intermediate layers frozen. Further, the output layer may also be tuned by the second training unit 23b during the retraining.

The score estimation unit 24 estimates a score (a credit score, creditworthiness) such as a second score for a target user, based on an attribute data group that includes factual attributes and inferred attributes related to the target user. At this time, the score estimation unit 24 may apply any processing (such as normalization, ranking, labeling, or the like) to the determined factual attributes and/or inferred attributes to be used as part of the attribute data group. Alternatively, the score estimation unit 24 may use other types of scores (for example, so-called credit scores or the like) or labels calculated using the determined factual attributes and/or inferred attributes as the whole or part of the attribute data group. Here, another machine learning model may be used to calculate different types of scores or labels. Note that the score estimation unit 24 may input an attribute data group for a target user, who is a virtual user with no usage history or transaction history in a service, into a second model to estimate a score related to the virtual user.

Fig. 6 is a simplified diagram of score estimation processing according to this embodiment. In this embodiment, the score estimation unit 24 estimates (calculates) a score for a user by inputting a user's attribute data group into a score estimation model. Here, the output value from the score estimation model is a score where, for example, 0 represents the minimum value and 1 represents the maximum value. In this embodiment, the score estimation unit 24 estimates a second score that varies according to the degree of risk borne by the provider of a second service when a target user uses the second service, by inputting an attribute data group related to the target user into a second model generated by the training unit 23.

### <<Flow of Processing>>

Next, the flow of processing executed by the information processing device according to this embodiment will be described. Note that the specific content and order of the processing described below are examples for implementing the present disclosure. The specific processing content and order may appropriately be selected according to an embodiment of the present disclosure.

Fig. 7 is a flowchart showing the flow of machine learning processing according to this embodiment. The processing shown in this flowchart is executed periodically or at a timing designated by an administrator.

In steps S101 and S102, a first score estimation model is generated. The first training unit 23a creates, for a user group related to a first service, first training data that includes a combination of an attribute data group for each user stored in the past and a label for the corresponding user determined in advance (step S101). Then, the first training unit 23a performs training processing on the first score estimation model based on the created first training data (step S102). After that, the processing proceeds to step S103.

In steps S103 and S104, a second score estimation model is generated. The second training unit 23b creates, for a user group related to a second service, second training data that includes a combination of an attribute data group for each user stored in the past and a label for the corresponding user determined in advance (step S103). Then, the second training unit 23b retrains the second score estimation model, which has some of the parameters of the first score estimation model generated in step S102 as fixed parameters, using the second training data to construct a second score estimation model for use in score estimation by the score estimation unit 24 (step S104). After that, the processing shown in this flowchart ends.

Fig. 8 is a flowchart showing the flow of score estimation processing according to this embodiment. The processing shown in this flowchart is executed for each target user periodically or at a designated timing.

In steps S201 and S202, factual attribute data and inferred attribute data are determined. The factual attribute determination unit 21 determines factual attribute data related to a target user based on user-provided data and/or history data for the target user (step S201). Then, the inferred attribute determination unit 22 determines inferred attribute data related to the target user based on at least the factual attribute data determined in step S201 (step S202). After that, the processing proceeds to step S203.

In steps S203 and S204, a score for the target user is estimated. The score estimation unit 24 determines an attribute data group that includes the factual attribute data determined in step S201 and the inferred attribute data determined in step S202 (step S203). Then, the score estimation unit 24 inputs the attribute data group determined in step S203 into a second estimation model and acquires an output value as a score that varies according to the degree of risk that a deferred payment will not be properly settled by the target user while using the deferred payment (step S204). However, a method for estimating the score is not limited to the one exemplified in this embodiment. For example, the score may also include a value obtained by inputting the attribute data group into a prescribed function, a statistical model, or the like instead of a machine learning model and calculating the same. After that, the processing shown in this flowchart ends.

### <<Variations>>

In this embodiment, the training unit 23 may further include a third training unit, a fourth training unit, ... an n-th (n > 2) training unit. Here, the n-th training unit trains an n-th model (an n-th score estimation model), which has the configuration of some of the parameters or the like of an n-1-th model trained by the n-1-th training unit as the configuration of fixed parameters or the like, using n-th training data that includes a combination of an n-th attribute data group related to a user who uses an n-th service different from first, second, ..., and n-1-th services, and a label corresponding to an n-th score that varies according to the degree of risk borne by the provider of the n-th service when the user uses the n-th service. At this time, the score estimation unit 24 may estimate a score for the user by inputting an attribute data group that includes factual attributes and inferred attributes related to the target user into the n-th model trained by the n-th training unit. Note that in this embodiment, a combination of services may be employed for the same user group where a score corresponding to risk in the n-1-th service and a score corresponding to the n-th service are correlated.

In this embodiment, the n-th training unit may select two or more models from a model group that includes the n-1-th model and an n-2-th model, and train the n-th model, which has some of the parameters of each selected model as fixed parameters, using the n-th training data. At this time, the n-th training unit may select two or more models including at least the n-1-th model from the model group.

In this embodiment, a second service different from a first service, or an n-th service different from first, second, ... and n-1-th services may be determined based on each attribute data group of a user group with a usage history or a transaction history in each service. For example, a second service different from a first service may be another service where users with an attribute data group similar to or matching that of the users of the first service are included beyond a prescribed ratio. Here, the similarity between the users may be based on the proportion of common attribute data between the users, whether prescribed attribute data is common, whether more than a prescribed number of combinations where embedded representations related to the users of each service are similar exist, or the like. Further, for example, an n-th service different from an n-1-th service may be another service where users with an attribute data group similar to or matching that of the users of at least the n-1-th service are included beyond a prescribed ratio.

### <<Advantage>>

In this embodiment, a machine learning model, which has been trained according to the payment situation of a deferred payment service and is capable of outputting credit scores, is trained using the data of a service different from the deferred payment service. As a result, it is possible to improve the accuracy of individual creditworthiness estimation even for services with relatively smaller datasets for training.

### <Second Embodiment>

This embodiment relates to a technology that trains a model using the attributes of users (including the commercial transaction histories of the users) belonging to one of two different segments that use a common service as datasets, and then retrains the model with the datasets of the other segment.

More specifically, in this embodiment, a mode will be described where the technology according to the present disclosure is implemented to train a machine learning model, which is used to calculate users' default risk (for example, the deferred payment risk described in the first embodiment) related to a finance-related service, using the attributes of users belonging to one of a plurality of user segments who use a commercial-transaction-related service as datasets, and then retraining is performed using the datasets of users belonging to another segment who use the commercial-transaction-related service based on the machine learning model. However, the technology according to the present disclosure is broadly applicable to technologies for calculating scores for users related to a different service, using a model generated with a plurality of datasets belonging to a plurality of different segments, respectively, in one service. The scope of the present disclosure is not limited to the example shown in the embodiment. For example, the technology according to the present disclosure may also be implemented to enable the estimation of risk for a plurality of different services in fields other than finance.

### <Configuration of System>

Fig. 9 is a schematic diagram showing the configuration of an information processing system according to this embodiment. In the information processing system according to this embodiment, an information processing device 1b and one or a plurality of service provision systems 5 are connected to be capable of communicating with each other. Users are the consumers of services provided by the service provision systems 5 and receive the services by accessing the service provision systems 5 via user terminals. Here, the information processing device 1b refers to a learning device, an estimation device, or a combination thereof. The configuration of the information processing system according to this embodiment is schematically the same as that of the information processing system according to the first embodiment described with reference to Fig. 1, except that the function configuration of the information processing device 1b described later with reference to Fig. 10 differs from that of the information processing device 1 according to the first embodiment. Therefore, the descriptions of the common parts will be omitted.

In this embodiment, a mode will be described where a machine learning model is trained using the attributes of users belonging to one of a plurality of user segments who use a commercial-transaction-related service (corresponding to the "first service" described later) among various services provided by the service provision systems 5 as datasets to calculate users' default risk related to a finance-related service (corresponding to the "second service" described later) that belongs to a different business classification or area, and then retraining is performed using the datasets of users belonging to another segment who uses the commercial-transaction-related service described above to calculate the default risk of the users in the other segment based on the machine learning model. Here, the commercial-transaction-related service refers to a service that belongs to "commercial transactions" in a business classification or area (segment, category, domain) and includes, for example, an online shopping service or an online reservation service. Further, the finance-related service refers to a service that belongs to "finance" in the business classification or area and includes, for example, a deferred payment service. Further, the retraining refers to transfer learning, additional learning, or the like according to the training mode. Note that the service groups in this embodiment may include service groups where membership programs (user identifiers) are common, service groups where point programs (electronic values such as points that can be granted or used) are common, or service groups that offer benefits usable in another service along with the usage of one service.

The information processing device 1b according to the present disclosure uses a machine learning model that outputs credit scores (in this embodiment, scores indicating deferred payment risk) for a second service using user attribute data or the like obtained from a first service (in this embodiment, an online shopping service) as input. Note that the details of the attribute data used as the input here are the same as in the first embodiment, in that factual attribute data and inferred attribute data can be included. Therefore, the description of the details will be omitted. Further the framework that can be used to generate or update the machine learning model is also the same as in the first embodiment. Therefore, the description of the framework will be omitted.

Fig. 10 is a diagram showing the outline of the function configuration of the information processing device 1b according to this embodiment. The information processing device 1b functions as an information processing device that includes a factual attribute determination unit 21, an inferred attribute determination unit 22, a training unit 25, a score estimation unit 24, and a segmentation unit 26 when a program stored in a storage device 14 is loaded into a RAM 13 and executed by a CPU 11 and then each hardware provided in the information processing device 1b is controlled. Note that in this embodiment and other embodiments described later, each function provided in the information processing device 1b is executed by the CPU 11 that represents a general-purpose processor. However, some or all of these functions may be executed by one or a plurality of dedicated processors.

The factual attribute determination unit 21, the inferred attribute determination unit 22, and the score estimation unit 24 are the same as those described in the first embodiment, and therefore the descriptions of these units will be omitted. On the other hand, the processing content of the training unit 25 is different from that of the training unit 23 described in the first embodiment. Further, the segmentation unit 26 is a function unit that is not described in the first embodiment, and therefore the training unit 25 and the segmentation unit 26 will be described below.

The segmentation unit 26 determines users belonging to a first segment and users belonging to a second segment by segmenting users who use a first service (in this embodiment, an online shopping service). Here, the segmentation unit 26 segments the users who use the first service based on the attribute data of the users obtained from the first service.

Here, the type of attribute data referred to for segmentation is not limited. However, in this embodiment, an example will be described where the usage frequency of a first service by each user within a prescribed period is employed as attribute data referred to for segmentation. In this embodiment, the segmentation unit 26 acquires the usage frequency (for example, the number of times) of a first service within a prescribed period from the first service and refers to the acquired usage frequency. Then, the segmentation unit 26 places users with a usage frequency above a prescribed threshold into a first segment consisting of users who perform transactions with a high frequency (a segment consisting of heavy users who perform transactions with a high frequency). Conversely, the segmentation unit 26 places users with a usage frequency below the prescribed threshold into a second segment consisting of users who perform transactions with a low frequency (a segment consisting of light users who perform transactions with a low frequency).

However, the type of attribute data referred to for segmentation is not limited as described above. For example, the attribute data referred to for segmentation may include attribute data related to the usage history or transaction history of a service. Further, for example, the attribute data referred to for segmentation may include the frequency of logging into the first service by each user within a prescribed period. When the frequency of logging into the first service by each user is referred to as the attribute data, the segmentation unit 26 can acquire the frequency (for example, the number) of logging into the first service within a prescribed period from the first service and refer to the acquired frequency. Then, the segmentation unit 26 can place users with a login frequency above a threshold into a first segment (a segment consisting of active users) and users with a login frequency below the prescribed threshold into a second segment (a segment consisting of inactive users). Further, the segmentation unit 26 may perform, for example, heuristic segmentation for users with a service usage history to uniquely determine users' segments on a rule basis according to attribute data that includes factual attribute data and inferred attribute data.

Further, the segmentation unit 26 may encode the attribute data of each user with a service usage history into an embedded representation (vector representation) and specify user groups that are similar or close to each other as segments based on the Euclidean distance or cosine similarity between the embedded representations. In other words, the segmentation unit 26 treats users who are close or similar to each other in any characteristic space (an embedded space or a latent space) as users belonging to one segment. Here, as a method used for encoding, a mode may be employed where embedded representations are acquired using a pre-trained model (a pre-trained model based on Transformer, such as neural networks and BERT), and where each user is embedded into a graph network as a node to acquire the embedded representations. After performing training using the datasets of a user group belonging to a certain segment segmented in this manner, the training unit 25 described later may preferentially select a segment that is closer to (or more similar to) the segment and perform retraining using the datasets of a user group belonging to the selected user group.

The training unit 25 generates and/or updates a score estimation model using the score estimation unit 24. The score estimation model refers to a machine learning model that, when one or a plurality of attribute data (attribute data groups) related to a target user is input, outputs a credit score indicating the degree of risk that a deferred payment will not be properly settled by the target user while using the deferred payment. This embodiment differs from the first embodiment where attribute data and scores for the same service are used, in that users' attribute data included in training data is obtained from a first service (in this embodiment, an online shopping service), while a score used is a credit score for the same user in a second service (in this embodiment, a deferred payment service) that is different from the first service.

In this embodiment, the training unit 25 includes at least a first training unit 25a and a second training unit 25b.

The first training unit 25a trains a first model (first score estimation model) using first training data that includes a combination of a first attribute data group related to a user belonging to a first segment among users who use a first service and a label corresponding to a score (a user's credit score in a second service) that varies according to the degree of risk borne by the provider of the second service when the user uses the second service different from the first service. The second service refers to a service different from the first service. As described above, the first service refers to an online shopping service, and the second service refers to a deferred payment service in this embodiment. Further, the risk borne by the provider of the second service refers to the deferred payment risk that is determined based on the payment history in the deferred payment service and represents the risk that a deferred payment will not be properly settled by the user while using the deferred payment, as indicated by any index (in this embodiment, a label that varies according to the degree of the deferred payment risk).

The second training unit 25b trains a second model (second score estimation model), which has some of the configuration (parameters such as intermediate layers, nodes, and other weights) of the first model trained by the first training unit 25a as fixed parameters, using second training data that includes a combination of a second attribute data group related to a user belonging to a second segment among users who use a first service and a label corresponding to a score that varies according to the degree of risk borne by the provider of the second service when the user uses the second service.

A specific framework for training, using the second training data, the second model (second score estimation model), which has some of the parameters of the configuration of the first model trained by the first training unit 25a as fixed parameters, is the same as the content described in the first embodiment with reference to Figs. 3 to 5. Therefore, the description of the framework will be omitted.

### <<Flow of Processing>>

Next, the flow of processing performed by the information processing device according to this embodiment will be described. Note that the specific content and order of the processing described below are examples for implementing the present disclosure. The specific processing content and order may appropriately be selected according to an embodiment of the present disclosure.

Fig. 11 is a flowchart showing the flow of machine learning processing according to this embodiment. The processing shown in this flowchart is performed periodically or at a timing designated by an administrator.

In step S300, a user group is segmented. The segmentation unit 26 determines users belonging to a first segment and users belonging to a second segment by segmenting users who use a first service, based on the attribute data of the users who use the first service. After that, the processing proceeds to step S301.

In steps S301 and S302, a first score estimation model is generated. The first training unit 25a creates first training data that includes a combination of a first attribute data group related to a user belonging to the first segment among the users who use the first service and a label corresponding to a score that varies according to the degree of risk borne by the provider of the second service when the user uses the second service different from the first service (step S301). Then, the first training unit 25a performs training processing on the first score estimation model based on the created first training data (step S302). After that, the processing proceeds to step S303.

In steps S303 and S304, a second score estimation model is generated. The second training unit 25b creates second training data that includes a combination of a second attribute data group related to a user belonging to the second segment among the users who use the first service and a label corresponding to a score that varies according to the degree of risk borne by the provider of the second service when the user uses the second service (step S303). Then, the second training unit 25b retrains the second score estimation model, which has some of the parameters of the first score estimation model generated in step S302 as fixed parameters, using the second training data to construct a second score estimation model for use in score estimation by the score estimation unit 24 (step S304). After that, the processing shown in this flowchart ends.

The flow of the score estimation processing according to this embodiment is schematically the same as the flow of the processing described in the first embodiment with reference to Fig. 8. Therefore, the description of the flow will be omitted.

### <<Variations>>

In the second embodiment described above, an example is described where users who use a first service are classified into two segments, and training is performed in two stages. However, the number of segments and the number of training stages are not limited to the example described above. Like the first embodiment, the training unit 25 may further include a third training unit, a fourth training unit, ... an n-th (n > 2) training unit. Here, the n-th training unit trains an n-th model (an n-th score estimation model), which has the configuration of some of the parameters or the like of an n-1-th model trained by the n-1-th training unit as the configuration of fixed parameters or the like, using n-th training data that includes a combination of an n-th attribute data group related to a user belonging to an n-th segment among users who use a first service and a label corresponding to a score that varies according to the degree of risk borne by the provider of a second service when the user uses the second service different from the first service. At this time, the score estimation unit 24 may estimate scores for the users by inputting an attribute data group that includes factual attributes and inferred attributes related to the target user into the n-th model trained by the n-th training unit. For example, as a variation of the embodiment described above, users may be segmented into the three segments of "heavy users," "middle users," and "light users," and training may be performed in three stages.

Further, in this embodiment as well, the n-th training unit may select two or more models from a model group that includes the n-1-th model and an n-2-th model, and train the n-th model, which has some of the parameters of each selected model as fixed parameters, using the n-th training data. At this time, the n-th training unit may select two or more models including at least the n-1-th model from the model group.

### <<Advantage>>

There is a concern that the accuracy of score estimation may become low because the amount or quality of attribute data is insufficient (for example, the amount is relatively small, the attribute data is missing, or the like) for users belonging to a certain segment (for example, light users in a first service). Therefore, in this embodiment, a first score estimation model is created using the attribute data of users in a first segment who have a sufficient amount or quality of attribute data (for example, heavy users in a first service). Then, with part of the first score estimation model fixed, retraining is performed using the attribute data of users in a second segment who have an insufficient amount or quality (for example, light users in the first service) to create a second score estimation model. As a result, it is possible to improve the accuracy of individual creditworthiness estimation even for users (here, light users) in segments with relatively smaller datasets for training.

### [Reference Signs List]

1, 1b Information processing device

## Claims

1. A credit learning device comprising:
first training means for training a first model using first training data that includes a combination of a first attribute data group related to a user who uses a first service and a label corresponding to a first score that varies according to a degree of risk borne by a provider of the first service when the user uses the first service; and
second training means for training a second model, which has some of parameters of a configuration of the trained first model as fixed parameters, using second training data that includes a combination of a second attribute data group related to a user who uses a second service different from the first service and a label corresponding to a second score that varies according to a degree of risk borne by a provider of the second service when the user uses the second service.

2. The credit learning device according to claim 1, wherein
the first service refers to a deferred payment service,
the second service refers to a service different from the deferred payment service, and
the risk borne by the provider of the first service refers to deferred payment risk, which is determined on a basis of a payment history in the deferred payment service and is caused when a deferred payment is not properly settled by the user while using the deferred payment.

3. The credit learning device according to claim 1, wherein
the second service refers to a service where correlation between the risk borne by the provider of the first service when the user uses the first service and the risk borne by the provider of the second service when the user uses the second service is confirmed or inferred.

4. The credit learning device according to claim 1, wherein
the first model and the second model are gradient boosting decision trees, and
the second training means trains the second model, which has parameters of some of nodes in the first model as fixed parameters, using the second training data.

5. The credit learning device according to claim 1, wherein
the first model and the second model are neural networks, and
the second training means trains the second model, which has parameters of some of intermediate layers of the trained first model as fixed parameters, using the second training data.

6. The credit learning device according to claim 5, wherein
the second training means trains the second model, which has a plurality of copies of the trained first models arranged in parallel and has the parameters of some of the intermediate layers included in the second model as fixed parameters, using the second training data.

7. The credit learning device according to claim 1, further comprising:
factual attribute determination means for determining a factual attribute that is confirmable as a fact about the user, on a basis of user-provided data provided by the user himself/herself or history data of the user; and
inferred attribute determination means for determining an inferred attribute about the user on a basis of at least the factual attribute related to the user.

8. A credit learning method that causes a computer to execute:
a first training step of training a first model using first training data that includes a combination of a first attribute data group related to a user who uses a first service and a label corresponding to a first score that varies according to a degree of risk borne by a provider of the first service when the user uses the first service; and
a second training step of training a second model, which has some of parameters of a configuration of the trained first model as fixed parameters, using second training data that includes a combination of a second attribute data group related to a user who uses a second service different from the first service and a label corresponding to a second score that varies according to a degree of risk borne by a provider of the second service when the user uses the second service.

9. A program that causes a computer to function as:
first training means for training a first model using first training data that includes a combination of a first attribute data group related to a user who uses a first service and a label corresponding to a first score that varies according to a degree of risk borne by a provider of the first service when the user uses the first service; and
second training means for training a second model, which has some of parameters of a configuration of the trained first model as fixed parameters, using second training data that includes a combination of a second attribute data group related to a user who uses a second service different from the first service and a label corresponding to a second score that varies according to a degree of risk borne by a provider of the second service when the user uses the second service.

10. A credit estimation device comprising:
estimation means for estimating a second score set for a target user by inputting an attribute data group related to the target user into the second model trained by the training method according to claim 8.

11. A credit estimation method that causes a computer to execute:
an estimation step of estimating a second score set for a target user by inputting an attribute data group related to the target user into the second model trained by the training method according to claim 8.

12. A program that causes a computer to function as:
estimation means for estimating a second score set for a target user by inputting an attribute data group related to the target user into the second model trained by the training method according to claim 8.

13. A credit learning device comprising:
first training means for training a first model using first training data that includes a combination of a first attribute data group related to a user belonging to a first segment among users who use a first service and a label corresponding to a score that varies according to a degree of risk borne by a provider of a second service when the user uses a second service different from the first service; and
second training means for training a second model, which has some of parameters of a configuration of the trained first model as fixed parameters, using second training data that includes a combination of a second attribute data group related to a user belonging to a second segment different from the first segment among the users who use the first service and a label corresponding to a score that varies according to a degree of risk borne by a provider of the second service when the user uses the second service.

14. The credit learning device according to claim 13, further comprising:
segmentation means for determining the user belonging to the first segment and the user belonging to the second segment by segmenting the users who use the first service.

15. The credit learning device according to claim 14, wherein
the segmentation means segments the users who use the first service on a basis of attribute data of the users who use the first service.

16. The credit learning device according to claim 15, wherein
the segmentation means segments the users who use the first service on a basis of a usage frequency of the first service within a prescribed period.

17. The credit learning device according to claim 13, wherein the second service refers to a deferred payment service, and
the risk borne by the provider of the second service refers to deferred payment risk, which is determined on a basis of a payment history in the deferred payment service and is caused when a deferred payment is not properly settled by the user while using the deferred payment.

18. The credit learning device according to claim 13, wherein
the second service refers to a service where correlation between the risk borne by the provider of the first service when the user uses the first service and the risk borne by the provider of the second service when the user uses the second service is confirmed or inferred.

19. The credit learning device according to claim 13, wherein
the first model and the second model are gradient boosting decision trees, and
the second training means trains the second model, which has parameters of some of nodes in the first model as fixed parameters, using the second training data.

20. The credit learning device according to claim 13, wherein
the first model and the second model are neural networks, and
the second training means trains the second model, which has parameters of some of intermediate layers of the trained first model as fixed parameters, using the second training data.

21. The credit learning device according to claim 20, wherein
the second training means trains the second model, which has a plurality of copies of the trained first models arranged in parallel and has the parameters of some of the intermediate layers included in the second model as fixed parameters, using the second training data.

22. The credit learning device according to claim 13, further comprising:
factual attribute determination means for determining a factual attribute that is confirmable as a fact about the user, on a basis of user-provided data provided by the user himself/herself or history data of the user; and
inferred attribute determination means for determining an inferred attribute about the user, on a basis of at least the factual attribute related to the user.

23. A credit learning method that causes a computer to perform:
a first training step of training a first model using first training data that includes a combination of a first attribute data group related to a user belonging to a first segment among users who use a first service and a label corresponding to a score that varies according to a degree of risk borne by a provider of a second service when the user uses a second service different from the first service; and
a second training step of training a second model, which has some of parameters of a configuration of the trained first model as fixed parameters, using second training data that includes a combination of a second attribute data group related to a user belonging to a second segment different from the first segment among the users who use the first service and a label corresponding to a score that varies according to a degree of risk borne by a provider of the second service when the user uses the second service.

24. A program that causes a computer to function as:
first training means for training a first model using first training data that includes a combination of a first attribute data group related to a user belonging to a first segment among users who use a first service and a label corresponding to a score that varies according to a degree of risk borne by a provider of a second service when the user uses a second service different from the first service; and
second training means for training a second model, which has some of parameters of a configuration of the trained first model as fixed parameters, using second training data that includes a combination of a second attribute data group related to a user belonging to a second segment different from the first segment among the users who use the first service and a label corresponding to a score that varies according to a degree of risk borne by a provider of the second service when the user uses the second service.

25. A credit estimation device comprising:
estimation means for estimating a second score set for a target user by inputting an attribute data group related to the target user into the second model trained by the training method according to claim 23.

26. A credit estimation method that causes a computer to execute:
an estimation step of estimating a second score set for a target user by inputting an attribute data group related to the target user into the second model trained by the training method according to claim 23.

27. A program that causes a computer to function as:
estimation means for estimating a second score set for a target user by inputting an attribute data group related to the target user into the second model trained by the training method according to claim 23.
